# EUROPÄISCHE PATENTANMELDUNG

(11) **EP 1 738 941 A1**
(43) Veröffentlichungstag der Anmeldung: **03.01.2007**
(21) Anmeldenummer: 06012990.5
(22) Anmeldetag: 23.06.2006
(51) Int. Cl.: B60H 1/00

(54) **Kraftfahrzeug-Klimaanlage**

(30) Priorität: 27.06.2005 DE 102005030062
(71) Anmelder: Behr GmbH & Co. KG, 70469 Stuttgart (DE)
(72) Erfinder: Frank, Andrea Dipl.-Ing., 70499 Stuttgart (DE); Radressa, Genis Dipl.-Ing., 70182 Stuttgart (DE)

(57) **Zusammenfassung**

Die Erfindung betrifft eine Kraftfahrzeug- Heizungs- und/oder Klimaanlage mit einem ersten Luftkanal in dem ein Heizwärmetauscher angeordnet ist zur Führung eines Warmluftstromes, einem zweiten Luftkanal zur Führung eines Kaltluftstromes, der den Heizwärmetauscher umgeht, einen Mischraum in den der erste und zweite Luftkanal münden, einem dritten von diesem Mischraum abgehenden Luftkanal, mit einer den Öffnungsquerschnitt des dritten Luftkanals steuernden Klappe, wobei die Klappe (10) einen Wandbereich (22) aufweist, der in einer den dritten Luftkanal öffnenden Stellung der Klappe einen aus dem ersten Luftkanal in den Mischraum eintretenden Warmluftstrom (20) in Richtung eines aus dem zweiten Luftkanal in den Mischraum eintretenden Kaltluftstromes (21) umlenkt.

## Beschreibung

Die Erfindung betrifft eine Kraftfahrzeug-Klimaanlage gemäß dem Oberbegriff des Anspruchs 1.

Herkömmlicherweise wird in Luftführungsgehäusen von Kraftfahrzeug-Klimaanlagen eine Mehrzahl von Klappen verwendet, welche die Luft mittels Mischung zweier Luftströme mit unterschiedlicher Temperatur auf die gewünschte Temperatur temperieren (Mischklappe), und die Verteilung derselben auf unterschiedliche Luftkanäle, nämlich dem Defrost-Luftkanal, dem Belüftungs-Luftkanal und dem Fußraum-Luftkanal, steuert. Dies ist insbesondere der Fall, wenn eine geschichtete Strömung erzeugt werden soll, wofür Kaltluft und Warmluft unter Ausbildung einer Temperaturschichtung gezielt bereichsweise gemischt und bereichsweise parallel zueinander geführt werden. An den Austritten zu den Luftkanälen sind Klappen mit einer im Wesentlichen zentral im Luftkanal angeordneten Schwenkachse vorgesehen, so dass für eine Betätigung der Klappe möglichst geringe Stellkraft aufzuwenden ist.

Derartige meist doppelflügelige Klappen, auch Schmetterlingsklappen genannt, sind beispielsweise für unterschiedliche Ausströmkanäle wie Belüftungs- oder Fußraumkanäle in der DE 103 53 191 A1 offenbart, die sich insbesondere auf die Ausgestaltung der Mischklappe und die Temperaturschichtung innerhalb einer Klimaanlage bezieht.

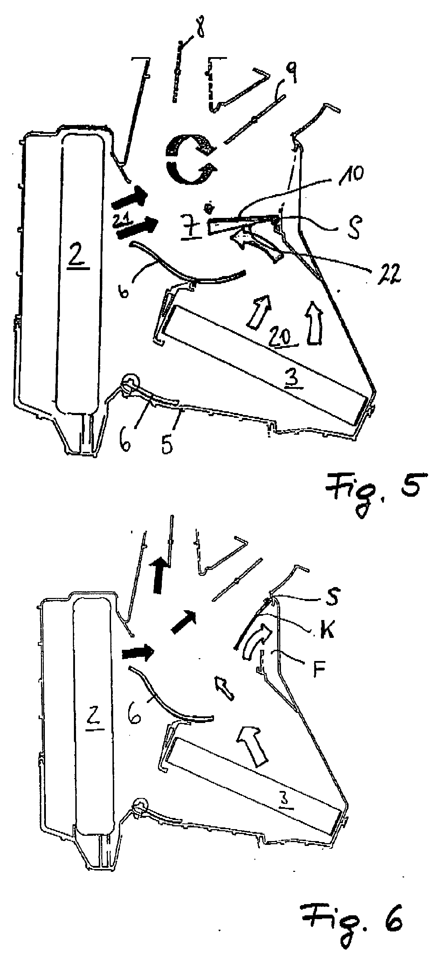

Ein weiteres Beispiel einer bekannten Klimaanlage ist in Fig.6 dargestellt. Am Austritt zum Fußraumkanal F, ist eine Klappe K angeordnet und um eine Schwenkachse S am oberen Klappenende drehbar gelagert. Durch die Art der Öffnung der Klappe K ist der in den Fußraumkanal eintretende Luftstrom in der dargestellten Klappenstellung stärker erwärmt, als der in die beiden weiteren Luftauslasskanäle eintretende Luftstrom.

Insbesondere in Hinblick auf eine zu große Schichtung der Luft kommt es jedoch bei derartigen Klimaanlagen häufig zu Problemen, vor allem in Hinblick auf die aus dem Fußraumaustritt ausströmende Luft bei den Betriebsstellungen Fußraum/Belüftung und Fußraum/Defrost.

Um die genannten Schichtungsprobleme zu beseitigen, werden teilweise Luftleitelemente eingebaut, die jedoch die Luftmenge verringern und zudem zu Geräuschen führen können.

Es ist Aufgabe der Erfindung, eine verbesserte Kraftfahrzeug-Klimaanlage zur Verfügung zu stellen.

Diese Aufgabe wird gelöst durch eine Kraftfahrzeug-Klimaanlage mit den Merkmalen des Anspruchs 1. Vorteilhafte Ausgestaltungen sind Gegenstand der Unteransprüche.

Erfindungsgemäß ist eine Kraftfahrzeug-Klimaanlage vorgesehen mit mindestens einem ersten Luftkanal in dem ein Heizwärmetauscher angeordnet ist zur Führung eines Warmluftstromes, mindestens einem zweiten Luftkanal zur Führung eines Kaltluftstromes, der den Heizwärmetauscher umgeht, zumindest einen Mischraum in den der erste und zweite Luftkanal münden, zumindest einem dritten von diesem Mischraum abgehenden Luftkanal, mit zumindest einer den Öffnungsquerschnitt des dritten Luftkanals steuernden Klappe. Die Klappe weist einen Wandbereich auf, der in einer den dritten Luftkanal öffnenden Stellung der Klappe einen aus dem ersten Luftkanal in den Mischraum eintretenden Warmluftstrom in Richtung eines aus dem zweiten Luftkanal in den Mischraum eintretenden Kaltluftstromes umlenkt.

Die Klappe ist vorzugsweise um eine Schwenkachse drehbar gelagert. Bewegt sich die Klappe von einer den dritten Luftkanal schließenden Stellung in eine den dritten Luftkanal öffnende Stellung, schwenkt diese entgegen der Strömungsrichtung, der aus dem ersten Luftkanal austretenden Warmluft, wodurch besondere Luftleiteffekte möglich sind, die auch positive Auswirkungen auf die Temperaturmischung und/oder -schichtung haben, so dass eine Optimierung derselben möglich ist. Zudem lässt sich die Luftverteilung auf sich nach der Klappe verzweigende Kanäle verbessern.

Vorteilhafterweise ist die Schwenkachse der Klappe im Bereich einer Trennwand zwischen dem zumindest zweiten Luftkanal und zumindest dritten Luftkanal, angeordnet. In einer weiteren Ausgestaltung der Erfindung ist vorgesehen, die Schwenkachse am Endbereich der Klappe anzuordnen und/oder bei einer mittleren Stellung der Klappe oder einer den dritten Luftkanal schließenden Stellung räumlich unterhalb derselben angeordnet. Insbesondere ist die Ausbildung der Klappe als eine so genannte Fahnenklappe, also einer Klappe mit einer Schwenkachse und nur einem von dieser abgehenden Klappenschenkel vorteilhaft.

Bevorzugt ist die Schwenkachse seitlich versetzt am Endbereich der Klappe angeordnet. Dies ermöglicht eine optimierte Ausgestaltung der Klappe in Hinblick auf die Luftleitfunktion in der geöffneten Stellung.

Bevorzugt ist die Schwenkachse beabstandet vom Wandbereich der Klappe, insbesondere im Mischraum angeordnet und/oder die Klappe als Trommelklappe ausgeführt.

Der dritte Luftkanal führt vorzugsweise in den Fußbereich des Kraftfahrzeugs. Die entsprechende Klappe ist also dem Fußraumaustritt zugeordnet. Auf Grund der normalerweise außen angeordneten Position des Fußraumaustritts kann die Klappe auf diese Weise als eine Art Luftleitelement dienen, welches in vollständig geöffneter Stellung der Klappe die Luft zum Austritt leitet. Die Luft tritt mit einem relativ gleichmäßigen Strömungsverlauf in den Luftkanal ein. Dies ist insbesondere in Hinblick auf eine anschließende Verzweigung des Luftkanals in Bezug auf Gesamtluftmenge und Akustik gegenüber anderen Lösungen vorteilhaft, da so eine von der Klappenstellung unabhängige Luftverteilung möglich ist.

Je nach gewünschter Luftschichtungs- und Lufttemperierungscharakteristik ist der Wandbereich der Klappe eben oder gekrümmt, insbesondere konkav, konvex oder zylindrisch oder in beliebiger Kombination dieser Profile ausgeführt.

Der Schwenkwinkel der Klappe beträgt vorzugsweise mindestens 50°, insbesondere 60° und maximal 90°, bevorzugt 120°, insbesondere 180°. Besonders vorteilhaft ist, wenn der Schwenkwinkel der Klappe 80° +/- 20° beträgt. Dies ermöglicht eine gute Luftleitfunktion der Klappe.

Vorteilhafterweise weist die Kraftfahrzeug- Heizungs- und/oder Klimaanlage noch zumindest einen vierten Luftkanal, beispielsweise einen Belüftungskanal für den Innenraum des Fahrzeugs und/oder einen fünften Luftkanal, beispielsweise einen Defrostkanal für die Fahrzeugscheibe des Fahrzeugs auf.

Zum Antrieb der Klappen sind bevorzugt ein oder mehrere in Abhängigkeit voneinander gesteuerte Motoren vorgesehen. Ist nur ein Motor vorgesehen, so sind die Klappen vorzugsweise über Getriebe mit der Motorwelle verbunden, wofür Kurvenscheiben o. ä. vorgesehen sein können.

Wenn es sich bei der Klimaanlage um eine mehrzonige Klimaanlage handelt, können zwei Klappen mit der gleichen Schwenkachse vorgesehen sind, die jeweils einen Austritt regeln. Die Klappen haben hierbei jedoch bevorzugt unterschiedliche Antriebe, um eine unabhängige Regelung für die einzelnen Klimazonen zu ermöglichen.

Im Folgenden wird die Erfindung anhand zweier Ausführungsbeispiele unter Bezugnahme auf die Zeichnung im Einzelnen erläutert. In der Zeichnung zeigen:
- Fig. 1: eine schematische Darstellung einer Kraftfahrzeug-Klimaanlage gemäß dem ersten Ausführungsbeispiel,
- Fig. 2: eine Fig. 1 entsprechende Darstellung der Klimaanlage mit schematisch dargestelltem Strömungsverlauf,
- Fig. 3: eine schematische Darstellung einer Kraftfahrzeug-Klimaanlage gemäß dem zweiten Ausführungsbeispiel, und
- Fig. 4: eine schematische Darstellung einer Kraftfahrzeug-Klimaanlage gemäß dem dritten Ausführungsbeispiel, und
- Fig. 5: eine schematische Darstellung einer Kraftfahrzeug-Klimaanlage gemäß dem vierten Ausführungsbeispiel.
- Fig.6: eine schematische Darstellung einer Kraftfahrzeug-Klimaanlage gemäß dem Stand der Technik

Eine Kraftfahrzeug-Klimaanlage 1 weist einen Verdampfer 2 und einen Heizwärmetauscher 3 auf, die in einem Luftführungsgehäuse 5 angeordnet sind. Die Temperierung der Luft erfolgt mittels Mischklappen bzw. Temperaturmischklappen 6, wobei eine erste Mischklappe 6 als zweischenkelige Schmetterlingsklappe ausgebildet ist und den Warmluftkanal 20, der den Heizwärmetauscher 3 beinhaltet, öffnen und schließen kann und eine zweite Mischklappe 6 in trommelartiger Form ausgeführt ist und den Eintritt des Kaltluftkanals 21 und des Warmluftkanals 20 in den Mischraum 7 wechselseitig öffnet und schließt. Die teilweise Vermischung der unterschiedlich temperierten Luftströme erfolgt in eben diesem Mischraum 7. Stellungen in denen die Mischklappen 6 den Warmluftkanal 20 verschließen sind gestrichelt gezeichnet, Stellungen in denen sie den Warmluftkanal 20 freigeben mit durchgezogenen Linien dargestellt. Strömungsrichtungen von im Wesentlichen warmer Luft sind in den Figuren durch ausgefüllte Pfeile, Strömungsrichtungen von im Wesentlichen kalter Luft durch nicht gefüllte Pfeile dargestellt. Alle Figuren entsprechen einem Schnittbild entlang einer in Fahrrichtung des Fahrzeugs liegenden Schnittebene, der in das Fahrzeug eingebauten Klimaanlage.

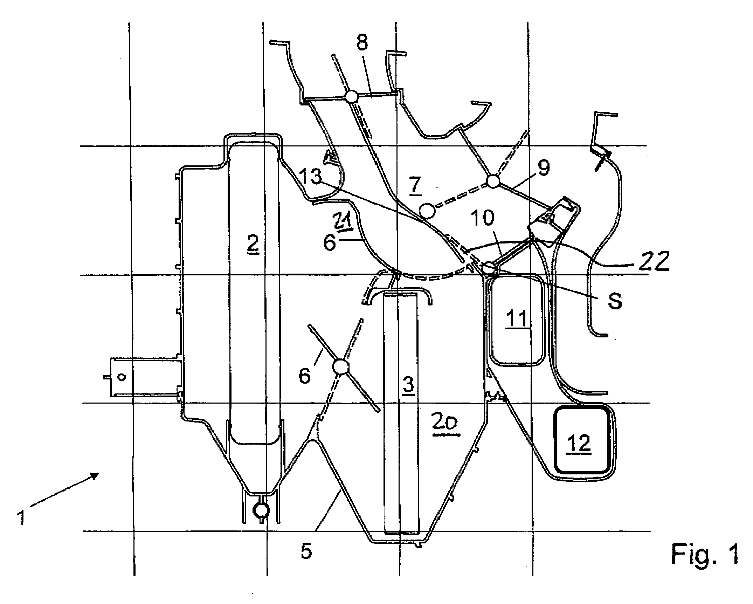

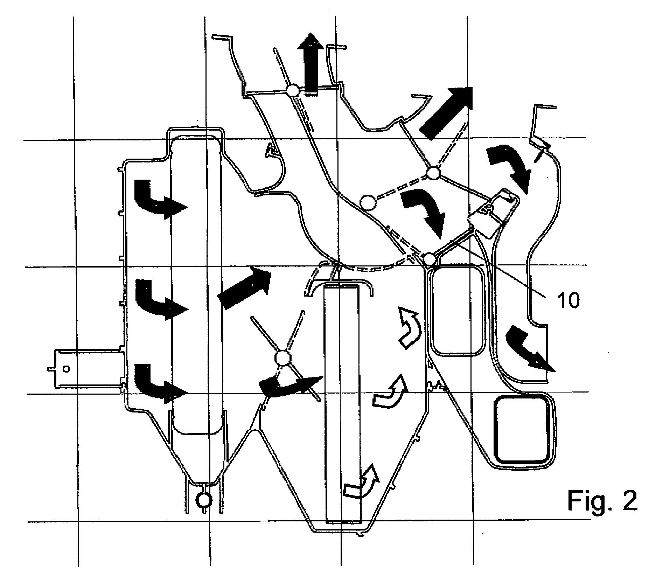

Vom Mischraum 7 zweigen verschiedene Luftkanäle ab, wobei am Defrostauslass eine Defrostklappe 8, am Belüftungsauslass eine Belüftungsklappe 9 und am Fußraumauslass eine Fußraumklappe 10 vorgesehen ist. Der Fußraum-Luftkanal verzweigt sich hinter der Klappe 10 in einen Fußraum-Luftkanal 11 für den Frontbereich und einen Fußraum-Luftkanal 12 für den Fondbereich. In den Figuren 1 und 2 sind jeweils die geschlossenen Stellungen der Klappen 8, 9 und 10 zu den entsprechenden Luftkanälen mit durchgezogenen Linien und die offenen Stellungen mit gestrichelten Linien dargestellt.

Wie aus Fig. 1 ersichtlich, handelt es sich bei den Klappen 8 und 9 um Schmetterlingsklappen mit einer zentral angeordneten Schwenkachse, so dass der Kraftaufwand zum Verstellen der Klappen 8 und 9 gering gehalten werden kann. Bei der Fußraumklappe 10 ist jedoch die Schwenkachse S auf einer Seite des Austritts angeordnet, wobei der im Wesentlichen eben oder plan ausgeführte Wandbereich 22 der Klappe in Richtung des Mischraums 7 verschwenkbar ist, vorliegend um ca. 110°. Hierbei ist sie in ihrer einen Endstellung in Anlage an die der Schwenkachse S gegenüberliegende Seite des Austritts und verschließt denselben vollständig, in ihrer anderen Endstellung ist sie in teilweiser Anlage an eine Trennwand 13 für die Temperaturschichtung, die im Luftführungsgehäuse 5 vorgesehen ist und die nur über einen geringen Teil des Querschnitts des Luftführungsgehäuses angeordnet ist. Auf Grund der Ausgestaltung der Klappe 10 und Anordnung der Schwenkachse derselben ist in allen Klappenstellungen eine gleichmäßige Luftverteilung auf die beiden Fußraum-Luftkanäle 11 und 12 möglich.

Mögliche Strömungsverläufe der Luft sind in Fig. 2 durch Pfeile angedeutet. Wie aus der Darstellung ersichtlich, dient die Fußraumklappe 10 in ihrer geöffneten Stellung als eine Art Luftleitelement, welches bei vollständig geöffneter Klappe 10 die durch den Warmluftkanal 20 geführte Luft in Richtung des durch den Kaltluftkanal 21 in den Mischraum 7 eintretenden Kaltluftstroms abgelenkt wird. Dadurch kommt es im Mischraum, vor Weiterverteilung der Luft auf die entsprechenden Austrittskanäle zu einer stärkeren Durchmischung. Die trommelartige Mischklappe 6 ist dabei in einer Zwischenstellung dargestellt, die sowohl kalte als auch warme Luft in den Mischraum eintreten lässt.

Die Steuerung der Klappen 8, 9 und 10 erfolgt auf an sich bekannte Weise, wobei vorliegend ein Stellmotor mit Kurvenscheibe vorgesehen ist, so dass die Klappen 8, 9 und 10 jeweils in Abhängigkeit voneinander geöffnet oder geschlossen werden oder Zwischenstellungen einnehmen.

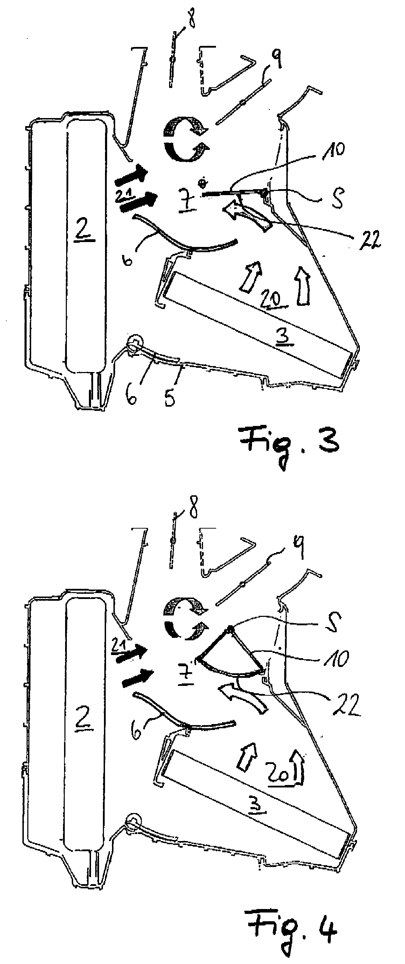

Gemäß dem zweiten, in Fig. 3 dargestellten Ausführungsbeispiel sind gleiche oder gleich wirkende Elemente mit den gleichen Bezugszeichen wie beim zuvor beschriebenen ersten Ausführungsbeispiel bezeichnet. Hierbei ist wiederum eine Kraftfahrzeug-Klimaanlage 1 vorgesehen, welche einen Verdampfer 2 und einen Heizwärmetauscher 3 aufweist, welche in einem Luftführungsgehäuse 5 angeordnet sind. Die Temperierung der Luft erfolgt mit Hilfe zweier Klappen 6, wobei die vor dem Heizwärmetauscher 3 angeordnete Klappe eine Schwenkachse aufweist, welche an einem Ende der Klappe angeordnet ist. Die Klappe schwenkt in Strömungsrichtung, d.h. bei geöffneter Klappe liegt die Schwenkachse in Strömungsrichtung gesehen vor der Klappe.

Entsprechend dem ersten Ausführungsbeispiel sind einzelne Klappen 8, 9 und 10 an den entsprechenden Austritten vorgesehen. Hierbei ist die Fußraumklappe 10 wiederum um eine seitlich angeordnete Schwenkachse S verschwenkbar, wobei die Schwenkachse S diesmal zwar am Ende der Klappenfläche, jedoch seitlich nach außen, vorliegend räumlich nach unten versetzt ausgebildet ist. Der maximale Schwenkwinkel beträgt vorliegend etwa 90°, wobei die Klappe 10 in den Mischraum 7 hineinschwenkt und den Warmluftstrom in Richtung des in den Mischraum 7 eintretenden Kaltluftstroms umlenkt.

Gemäß dem zweiten Ausführungsbeispiel ist im Gegensatz zum ersten Ausführungsbeispiel die Klappe 10 mit einem leicht gekrümmten Wandbereich ausgebildet. Die Klappe ist in einer, den Fußraumkanal nahezu vollständig öffnenden Stellung, dargestellt, die Klappe 10 räumlich oberhalb der Schwenkachse S und mit ihrem der Schwenkachse abseitigen Ende nach oben zeigend angeordnet ist.

In beiden in Fig. 3 und 4 dargestellten Ausführungsbeispielen, ist die Mischklappe 6 in eine mittlere Stellung verschwenkt, in der sie jeweils einen Teil des Kaltluftkanals 21 und des Warmluftkanals 20 freigibt. Die in dem Warmluftkanal 20 geführte und erwärmte Luft wird durch den Wandbereich 22 der Fußraumklappe 10 in Richtung des kalten Luftstroms durch den Kaltkanal 21 umgelenkt. In den Figuren 3 und 4 ist dies durch die entsprechenden Pfeile symbolisiert.

Gemäß einem dritten, der Erfindung folgendem Ausführungsbeispiel ist Die Fußraumklappe 10 als trommelartige Klappe mit einem teilkreisförmigen Profil ausgebildet. Die Schwenkachse S der Klappe 10 befindet sich im Mischraum 7. Auch hier schwenkt die Klappe 10 in den Mischraum 7 beim Öffnen des Fußraumkanals und lenkt den Warmluftstrom in Richtung des in den Mischraum 7 eintretenden Kaltluftstroms um, was zu einer stärkeren Durchmischung und damit homogeneren Temperaturverteilung im Mischraum führt.

Ein viertes Ausführungsbeispiel ist in Fig.5 dargestellt, wobei die Fußraumklappe von dem, abseitig der Schwenkachse liegenden Ende sich in Richtung zur Schwenkachse hin verjüngt. Zudem kann der Wandbereich 22 der Fußraumklappe 22 mit Leitelementen, die sich beispielsweise nicht über den gesamten lateralen Bereich der Klappe erstrecken ausgebildet sein. Eine Anpassung des Wandbereichs 22, kann in Abhängigkeit eines möglichen Verschwenkwinkel der Klappe 10, sowie einer gewünschten Durchmischung und/oder Schichtung der Luft vorgenommen werden.

## Patentansprüche

1. Kraftfahrzeug- Heizungs- und/oder Klimaanlage mit mindestens einem ersten Luftkanal (20) in dem ein Heizwärmetauscher (3) angeordnet ist zur Führung eines Warmluftstromes, mindestens einem zweiten Luftkanal (21) zur Führung eines Kaltluftstromes, der den Heizwärmetauscher umgeht, zumindest einen Mischraum (7) in den der erste und zweite Luftkanal münden, zumindest einem dritten von diesem Mischraum abgehenden Luftkanal, mit zumindest einer den Öffnungsquerschnitt des dritten Luftkanals (11, 12) steuernden Klappe (10), **dadurch gekennzeichnet, dass** die Klappe (10) einen Wandbereich (22) aufweist, der in einer den dritten Luftkanal öffnenden Stellung der Klappe einen aus dem ersten Luftkanal in den Mischraum eintretenden Warmluftstrom in Richtung eines aus dem zweiten Luftkanal in den Mischraum eintretenden Kaltluftstromes umlenkt.

2. Kraftfahrzeug- Heizungs- und/oder Klimaanlage nach Anspruch 1, **dadurch gekennzeichnet, dass** die Klappe (10) um eine Schwenkachse (S) drehbar gelagert ist.

3. Kraftfahrzeug- Heizungs- und/oder Klimaanlage nach Anspruch 2, **dadurch gekennzeichnet, dass** die Schwenkachse (S) der Klappe (10) im Bereich einer Trennwand zwischen dem zumindest zweiten Luftkanal und zumindest dritten Luftkanal angeordnet ist.

4. Kraftfahrzeug- Heizungs- und/oder Klimaanlage nach Anspruch 2 oder 3, **dadurch gekennzeichnet, dass** die Schwenkachse (S) am Endbereich der Klappe (10) angeordnet ist.

5. Kraftfahrzeug- Heizungs- und/oder Klimaanlage nach einem der Ansprüche 2 bis 4, **dadurch gekennzeichnet, dass** die Schwenkachse (S) der Klappe (10) im Bereich einer Trennwand zwischen dem zumindest zweiten Luftkanal und zumindest dritten Luftkanal angeordnet ist.

6. Kraftfahrzeug- Heizungs- und/oder Klimaanlage nach einem der vorhergehenden Ansprüche, **dadurch gekennzeichnet, dass** die Schwenkachse (S) bei einer mittleren Stellung der Klappe (10) oder einer den dritten Luftkanal schließenden Stellung räumlich unterhalb derselben angeordnet ist.

7. Kraftfahrzeug- Heizungs- und/oder Klimaanlage nach Anspruch 2, **dadurch gekennzeichnet, dass** die Schwenkachse beabstandet vom Wandbereich der Klappe, insbesondere im Mischraum angeordnet ist.

8. Kraftfahrzeug- Heizungs- und/oder Klimaanlage nach einem der vorhergehenden Ansprüche, **dadurch gekennzeichnet, dass** die Klappe als Trommelklappe ausgeführt ist.

9. Kraftfahrzeug- Heizungs- und/oder Klimaanlage nach einem der vorhergehenden Ansprüche, **dadurch gekennzeichnet, dass** der dritte Luftkanal in den Fußbereich des Kraftfahrzeugs führt.

10. Kraftfahrzeug- Heizungs- und/oder Klimaanlage nach einem der vorhergehenden Ansprüche, **dadurch gekennzeichnet**, das der Wandbereich der Klappe eben ausgeführt ist.

11. Kraftfahrzeug- Heizungs- und/oder Klimaanlage nach einem der vorhergehenden Ansprüche, **dadurch gekennzeichnet**, das der Wandbereich der Klappe gekrümmt ausgeführt ist.

12. Kraftfahrzeug- Heizungs- und/oder Klimaanlage nach einem der vorhergehenden Ansprüche, **dadurch gekennzeichnet, dass** der Schwenkwinkel der Klappe (10) mindestens 60° beträgt.

13. Kraftfahrzeug- Heizungs- und/oder Klimaanlage nach einem der vorhergehenden Ansprüche, **dadurch gekennzeichnet, dass** der Schwenkwinkel der Klappe (10) maximal 180° beträgt.

14. Kraftfahrzeug- Heizungs- und/oder Klimaanlage nach einem der vorhergehenden Ansprüche, **dadurch gekennzeichnet, dass** die Kraftfahrzeug- Heizungs- und/oder Klimaanlage noch zumindest einen vierten und oder fünften Luftkanal aufweist.

15. Kraftfahrzeug- Heizungs- und/oder Klimaanlage nach Anspruch 14, **dadurch gekennzeichnet, dass** der vierte Luftkanal als Belüftungskanal für den Innenraum ausgebildet ist.

16. Kraftfahrzeug- Heizungs- und/oder Klimaanlage nach Anspruch 14 oder 15, **dadurch gekennzeichnet, dass** der fünfte Luftkanal als Defrostkanal für die Fahrzeugscheibe ausgebildet ist.

17. Kraftfahrzeug- Heizungs- und/oder Klimaanlage nach einem der vorhergehenden Ansprüche, **dadurch gekennzeichnet, dass** zum Antrieb der Klappen (8, 9, 10) ein oder mehrere in Abhängigkeit voneinander gesteuerte Motoren vorgesehen sind.

18. Kraftfahrzeug- Heizungs- und/oder Klimaanlage nach einem der vorhergehenden Ansprüche, **dadurch gekennzeichnet, dass** die Klimaanlage (1) eine mehrzonige Klimaanlage ist, wobei zwei Klappen (10) mit der gleichen Schwenkachse (S) vorgesehen sind, die jeweils einen Austritt regeln.

19. Kraftfahrzeug- Heizungs- und/oder Klimaanlage nach einem der vorhergehenden Ansprüche, **dadurch gekennzeichnet, dass** die Klimaanlage zumindest eines der folgenden Bauteile umfasst: Wärmetauscher, Heizwärmetauscher, Verdampfer, Filter, Temperaturmischklappe, einen oder mehrere Strömungskanäle und eine oder mehrere Steuerklappen zur Verteilung der Luft auf die Austrittskanäle.
